# DEMANDE DE BREVET EUROPEEN

(11) **EP 3 260 200 A1**
(43) Date de publication de la demande: **27.12.2017**
(21) Numéro de dépôt: 17177208.0
(22) Date de dépôt: 21.06.2017
(51) Int. Cl.: B01J 38/48, B01J 38/64, B01J 23/889, B01J 23/22, B01J 23/30, B01J 23/92, B01J 37/03, B01J 37/06, B01J 37/08, B01J 37/00, B01J 37/02

(54) **PROCÉDÉ DE FABRICATION D'UN CATALYSEUR NEUF À PARTIR D'UN CATALYSEUR USÉ**

(30) Priorité: 21.06.2016 FR 1655759
(71) Demandeur: LAB SA, 69007 Lyon (FR)
(72) Inventeur: SIRET, Bernard, 69200 VENISSIEUX (FR); TABARIES, Frank, 83430 SAINT MANDRIER SUR MER (FR)
(74) Mandataire: Lavoix

(57) **Abrégé**

Selon ce procédé :
- on dispose d'un catalyseur usé ayant un support formé d'oxyde de titane ou d'alumine,
- après avoir dépoussiéré, puis lavé et puis séché le catalyseur usé, on le broie en des particules de manière que la taille médiane desdites particules de catalyseur usé soit en deçà de 64 µm,
- dans une solution aqueuse, on mélange lesdites particules de catalyseur usé avec des sels métalliques comprenant au moins un métal du groupe V à VIII, de sorte que, dans le mélange desdites particules de catalyseur usé et de sels métalliques, le ou les métaux du groupe V à VIII apportés par les sels métalliques représentent entre 20% et 100%, en masse, desdites particules de catalyseur usé,
- par ajout d'un agent précipitant dans ce mélange jusqu'à obtention d'un pH supérieur à 7, on opère une précipitation des métaux des sels métalliques en utilisant lesdites particules de catalyseur usé comme substrat pour le dépôt des métaux précipités, et
- après avoir récupéré et séché la phase lourde contenant les métaux précipités et leur substrat de précipitation, on la calcine à une température comprise entre 400 et 550°C pour obtenir le catalyseur neuf.

## Description

La présente invention concerne un procédé de fabrication d'un catalyseur, en particulier d'un catalyseur de dénitrification actif à basse température contenant des oxydes métalliques.

Les catalyseurs de dénitrification sont largement utilisés pour réduire les émissions d'oxydes d'azote (NOₓ) dans un vaste domaine d'industries, parmi lesquelles l'industrie de l'incinération et l'industrie de la production d'énergie.

Les catalyseurs utilisés emploient un agent de réduction, le plus souvent de l'ammoniac (NH₃) et le procédé de leur utilisation est connu sous le nom de procédé SCR (Selective Catalytic Reduction). Le catalyseur comprend typiquement un support, autrement appelé base ou encore base-support, tel que l'alumine, l'oxyde de titane, l'oxyde de zirconium ou une zéolite, sur lequel au moins un métal des groupes V à VIII est déposé. La formulation de loin la plus communément utilisée est un catalyseur structuré, ayant un support formé d'oxyde de titane sous sa forme anatase, sur lequel sont déposés des principes actifs métalliques, tout particulièrement des oxydes de vanadium, tels que V₂O₅, et de tungstène, tels que WO₃. Pour réduire les oxydes d'azote, on associe à de tels catalyseurs l'introduction d'ammoniac de façon à ce que les réactions entre l'ammoniac et les oxydes d'azote forment de l'azote, détoxifiant ainsi les fumées. D'autres composés pouvant libérer de l'ammoniac au niveau ou en amont du catalyseur peuvent aussi être utilisés, par exemple de l'urée.

Afin de conduire la dénitrification de fumées de façon satisfaisante à une température limitée à moins de 300°C, le catalyseur et sa formulation jouent un rôle essentiel. Cependant, à des températures inférieures à 220°C, l'activité des catalyseurs commerciaux « standards », comprenant du vanadium, chute et n'est plus économiquement satisfaisante, le volume de catalyseur employé devenant trop important au regard du flux des fumées à traiter. Des formulations alternatives utilisant d'autres métaux, comme le cuivre, le fer ou le manganèse, ont été proposées et sont plus actives à ces températures que les formulations comprenant du vanadium et/ou du tungstène. En particulier, EP 2 747 100 et EP 2 933 018 proposent de telles formulations. Ces catalyseurs sont souvent préparés par des procédés de déposition-précipitation sur un support formé d'oxyde de titane ou d'alumine. On part alors soit de constituants du support très finement divisés, par exemple de l'oxyde de titane sous forme anatase ayant une surface spécifique de plus de 80 m²/gramme, soit d'acide titanique, voire d'alcoolate de titane qui sont précipités par hydrolyse. Le catalyseur obtenu est alors hautement actif, mais son procédé de fabrication reste complexe et onéreux.

JP 2015 192999 propose de fabriquer un catalyseur de dénitrification selon globalement la même approche qu'envisagée ci-dessus, à savoir d'abord préparer le futur support du catalyseur à fabriquer en « solubilisant » du titane par attaque de ce dernier avec de l'acide et/ou une solution aqueuse de titanyl sulfate de manière à former une bouillie ayant un pH très bas, compris entre 0,5 et 4, puis filtrer cette bouillie pour en mélanger la phase lourde avec des sels métalliques avant d'ajouter un agent basique pour amener le pH entre 7 et 12, ce qui induit à la fois la « gélification » d'oxydes de titane et la précipitation de métaux. Après calcination puis broyage en poudre, la poudre obtenue constitue un catalyseur actif dont le support est constitué d'oxyde de titane extrêmement divisé et donc très intéressant pour l'activité finale. L'originalité du procédé envisagé dans JP 2015 192999 est que le titane soumis à l'attaque de l'acide et/ou du titanyl sulfate n'est pas frais, mais provient du broyage en très fines particules d'un catalyseur usé. Ceci étant, la bouillie précitée est préparée avec des quantités d'acide et/ou de titanyl sulfate si importantes et est portée à des pH si bas que les contaminants présents dans le catalyseur usé sont soit réduits, soit retirés par séparation. En d'autres termes, les fines particules de catalyseur usé sont tellement « digérées » au début du procédé de JP 2015 192999 que ce procédé revient en fait à retirer du titane d'un catalyseur usé les contaminants présents dans ce catalyseur usé pour ne garder que le titane « pur » afin d'employer ce dernier à la fabrication d'un nouveau catalyseur. Ce procédé est donc particulièrement complexe et onéreux puisqu'il faut retirer le titane à partir d'acide métatitanique.

Par ailleurs, les catalyseurs, en particulier de dénitrification, se désactivent lentement mais inexorablement lors de leur utilisation, par des mécanismes divers comme l'empoisonnement ou le blocage des sites actifs et/ou des pores par des poussières ou des dépôts. Lorsque l'activité du catalyseur devient trop faible, ce catalyseur est considéré usé et il doit être remplacé par un catalyseur neuf. Le catalyseur usé est soit mis en décharge, ce qui n'est pas satisfaisant d'un point de vue écologique, soit retraité par nettoyage puis réimprégnation, ce qui conduit toutefois à une réactivation très souvent limitée et obtenue à des coûts substantiels.

Le but de la présente invention est de proposer un nouveau procédé de fabrication d'un catalyseur neuf, dont la mise en oeuvre est économique, pratique et écologique.

A cet effet, l'invention a pour objet un procédé de fabrication d'un catalyseur neuf, tel que défini à la revendication 1.

Une des idées à la base de l'invention est de préparer un catalyseur neuf à partir d'un catalyseur usé. Il y a lieu de relever immédiatement que cette idée va totalement à l'encontre des préjugés techniques du domaine. En effet, la matière, qui est utilisée comme substrat pour le dépôt d'espèces catalytiques actives et qui, à l'issue de la fabrication d'un catalyseur, en forme le support, est considérée comme très importante car cette matière conditionne la dispersion des espèces actives à sa surface, ainsi que l'acidité au sens de Lewis ou de Bronsted : dès lors, cette matière est unanimement reconnue comme déterminante en vue d'atteindre des valeurs d'activité élevées pour le catalyseur fabriqué à partir de cette matière. Cela explique d'ailleurs que, en particulier dans le domaine de la fabrication des catalyseurs de dénitrification, la tendance actuelle est de fabriquer ces catalyseurs à partir d'oxyde de titane dit à grade élevé, c'est-à-dire à partir d'oxyde de titane pur, sous forme anatase et à grande surface spécifique, cette dernière étant par exemple supérieure à 80 m²/g dans le cas d'un oxyde de titane dont la dénomination commerciale courante est « DT51 ». En d'autres termes, l'utilisation d'un support « contaminé » et ayant une surface spécifique faible est usuellement jugée comme non souhaitable, sauf à préalablement « digérer » ce support contaminé en l'attaquant en profondeur pour en retirer ou en oxyder les contaminants comme cela a été proposé dans JP 2015 192999 détaillé plus haut.

Les inventeurs ont constaté que, de manière surprenante, l'activité d'un catalyseur neuf fabriqué conformément à l'invention, c'est-à-dire à partir d'un catalyseur usé, n'est que très marginalement différente de celle d'un catalyseur neuf fabriqué de façon similaire mais à partir de constituants pour son support qui sont « purs », c'est-à-dire non usagés, tels que les oxydes de titane à grade élevé évoqués ci-dessus. L'invention permet ainsi de préparer un catalyseur neuf à partir d'un vieux catalyseur usé, dans le sens où le support de ce catalyseur neuf est formé par des particules de catalyseur usé, autrement dit des grains solides obtenus par broyage, sur lesquelles des métaux actifs sont directement déposés par précipitation. On évite donc de mettre en décharge le catalyseur usé, ce qui présente un avantage écologique évident et un avantage pratique opératoire, ainsi qu'un avantage économique notamment du fait que le coût de la matière première pour fabriquer le catalyseur neuf est moindre.

Des caractéristiques additionnelles avantageuses du procédé conforme à l'invention sont spécifiées aux revendications dépendantes.

L'invention sera mieux comprise à la lecture de la description qui va suivre, qui n'est donnée qu'à titre d'exemple et dans laquelle on détaille les étapes successives de préparation d'un catalyseur neuf.

Pour initier la préparation du catalyseur neuf, on doit disposer d'un catalyseur usé. On entend par usé un catalyseur ayant perdu au moins 30% de son activité initiale, c'est-à-dire 30% de l'activité que présentait ce catalyseur lorsqu'il était neuf. En pratique, la perte d'activité du catalyseur résulte de son utilisation dans une installation industrielle, en particulier et de manière privilégiée de son utilisation dans une unité de dénitrification SCR.

Ce catalyseur usé est un catalyseur, qui a un support, autrement appelé base ou encore base-support, formé d'oxyde de titane, typiquement TiO₂ sous forme anatase, ou bien formé d'alumine, et qui contient, par exemple, des oxydes de vanadium et de tungstène. Ceci étant, d'autres catalyseurs usés, qui supportent d'autres métaux, comme par exemple le platine, peuvent être utilisés. Dans tous les cas, le support représente au moins 75%, en masse, du catalyseur usé. En particulier, les catalyseurs de dénitrification SCR, qui, usuellement, ont un support formé de TiO₂ anatase et contiennent du vanadium, conviennent bien en tant que catalyseur usé.

Le catalyseur usé, qui se présente typiquement sous forme d'un monolithe, est d'abord dépoussiéré puis lavé. A titre d'exemple non limitatif, l'opération de dépoussiérage est réalisée par soufflage. Egalement à titre d'exemple non limitatif, le lavage est opéré par ruissellement d'eau dans les canaux du catalyseur usé ou bien par trempage de ce catalyseur usé.

Le catalyseur est ensuite séché, et ce par une opération connue en soi. Cette opération de séchage peut, par exemple, consister à utiliser une étuve ou un four, à faire circuler de l'air chaud dans le catalyseur, ou bien simplement à faire sécher le catalyseur à température ambiante. Il est important que, à la fin de l'opération de séchage, le catalyseur séché soit dur afin qu'il puisse être broyé par la suite.

Le catalyseur ainsi séché est ensuite broyé en des particules, et ce par tous moyens appropriés, connus en soi. Par exemple, et de manière non limitative, on peut utiliser des broyeurs à boulets ou des broyeurs à lames. L'opération de broyage correspondante est réalisée de sorte que la taille médiane des particules soit abaissée en deçà de 64 µm, la taille considérée pour les particules étant leur diamètre de Sauter dit « d32 », cette taille étant par exemple mesurée par méthode optique (après mise en suspension dans un solvant ad hoc). On définit par taille médiane la taille en dessous de laquelle se trouve plus de 50%, en masse, du produit auquel est appliquée l'opération de broyage. Cette taille est souvent appelée d₅₀ dans la littérature du domaine.

Des sels de métaux, qui comprennent au moins un métal, qualifié « d'actif » par la suite et appartenant aux groupes V à VIII de la classification périodique des éléments, sont mis en solution aqueuse, par exemple dans de l'eau, avec les particules de catalyseur broyé, de manière que la quantité du ou des métaux actifs précipités, exprimés sous leur forme de métal, est comprise entre 20% et 100%, en masse, des particules de catalyseur. Au sein de la solution résultant du mélange des particules de catalyseur usé et des sels métalliques, les particules de catalyseur usé conservent leur intégrité structurelle, c'est-à-dire qu'elles restent sous forme de grains solides tels qu'issus de l'opération de broyage du catalyseur usé. En particulier, il n'est pas prévu d'attaquer chimiquement les particules de catalyseur usé résultant du broyage du catalyseur usé, avant de les mettre en solution avec les sels métalliques. Et la solution, qui contient les sels métalliques dissous et dans laquelle sont mélangées les particules de catalyseur usé directement après le broyage du catalyseur usé, présente une acidité naturelle résultant de la dissolution des sels métalliques, qui n'est pas assez basse pour attaquer le support de ces particules, constitué d'oxyde de titane ou d'alumine. En pratique, le pH du mélange des sels métalliques et des particules de catalyseur usé est par exemple compris entre 4,1 et 6.

Le liquide dans lequel les sels métalliques sont solubilisés est normalement de l'eau, mais peut contenir d'autres composés déjà dissous, comme et de manière non limitative des agents dispersants et/ou complexants.

En ce qui concerne les métaux actifs, ils incluent préférentiellement le fer (Fe) et le manganèse (Mn). A titre optionnel, des métaux autres que ceux du groupe V à VIII peuvent être également prévus, tout particulièrement du Cérium (Ce). Il est préférable que les métaux apportés par les sels métalliques ne contiennent ni soufre, ni chlore, pour éviter de laisser des composés autres que des oxydes métalliques lors d'une opération ultérieure de calcination, détaillée plus loin.

Un agent précipitant est ensuite ajouté au mélange des sels métalliques et des particules de catalyseur, jusqu'à obtention d'un pH supérieur à 7, de préférence compris entre 8,5 et 9. Il en résulte que les métaux précipitent sous forme d'hydroxydes. La précipitation des métaux ainsi opérée utilise les particules de catalyseur usé comme substrat pour le dépôt des métaux précipités. Ainsi, les grains solides, résultant du broyage du catalyseur usé et présents en l'état dans la solution aqueuse où sont dissous les sels métalliques, sont utilisés pour déposer dessus les précipités des métaux apportés par les sels métalliques. On comprend qu'il n'est nullement question de précipiter des oxydes de titane ou des oxydes d'aluminium, de telles espèces n'étant pas solubilisées dans la solution à laquelle est ajouté l'agent précipitant.

En pratique, cette précipitation des métaux apportés par les sels métalliques peut être opérée sous agitation. A titre d'exemple d'agent précipitant, on peut utiliser une solution de carbamate d'ammonium, une solution de carbonate d'ammonium, de la monoéthanolamine, de l'ammoniac aqueux, de l'urée qui, par décomposition, libérera de l'ammoniac, ou bien une combinaison de ces agents. Il est également possible d'utiliser, en séquence, l'un puis l'autre, par exemple en commençant la précipitation par du carbamate jusqu'à pH 7, puis de terminer la précipitation jusqu'à pH 9 par de l'ammoniac.

Les précipités obtenus et leur substrat de précipitation forment une phase lourde qu'on sépare du reste, autrement dit d'une phase claire. Cette opération de séparation peut, par exemple, être réalisée par décantation, par filtration ou par centrifugation.

La phase lourde précitée est ensuite séchée, puis calcinée à une température comprise entre 400°C et 550°C. La calcination suit le séchage et s'opère normalement à une température supérieure à celle du séchage dont le rôle n'est que d'éliminer au moins 90% de l'eau. Un broyage optionnel peut être réalisé entre l'opération de séchage et l'opération de calcination.

A l'issue de l'opération de calcination, le produit résultant de cette calcination est broyé en poudre. Cette poudre constitue le catalyseur neuf ainsi fabriqué. En pratique, cette poudre peut être utilisée :
- soit directement sous forme pulvérulente, en tant que produit final industriel,
- soit mélangée à des liants, puis extrudée sous forme de monolithes avant d'être séchée et/ou calcinée,
- soit déposée sous forme d'une fine couche, d'une épaisseur d'au plus 400 µm, sur un support comme un monolithe en canaux, étant remarqué que les techniques de dépôt correspondantes, ainsi que les adjuvants, du genre colles ou polymères, à utiliser pour mettre en oeuvre ces techniques sont connues en soi.

### EXEMPLE :

Des catalyseurs neufs ont été fabriqués selon les spécifications détaillées ci-dessous. Un premier lot de catalyseurs neufs a été préparé à partir d'un oxyde de titane de grade dit « DT51 », comme évoqué précédemment. Un second lot de catalyseurs neufs a été préparé à partir d'un catalyseur usé ayant un support formé d'oxyde de titane et provenant d'une unité de dénitrification SCR d'une usine d'incinération. Ce catalyseur usé avait, juste avant d'être employé pour la préparation des catalyseurs neufs du second lot, une activité résiduelle inférieure à 50% de l'activité que ce catalyseur usé avait eu à son état neuf originel.

Dans 100 millilitres d'eau, 8,58 grammes d'acétate de manganèse tétrahydraté, 4,04 grammes de nitrate ferrique nonahydraté, et 2,74 grammes d'ammononitrate de cérium sont dissous : ces sels métalliques contiennent donc 0,56 gramme de fer et 1,92 gramme de manganèse, soit un cumul de 2,48 grammes de métaux actifs au sens défini plus haut. On ajoute soit, dans le cas de la préparation relative au premier lot, 4,4 grammes d'oxyde de titane de grade « DT51 », soit, dans le cas de la préparation relative au second lot, 4,4 grammes de particules de catalyseur usé obtenues par des opérations successives de dépoussiérage, lavage, séchage et broyage répondant aux indications données plus haut. Ainsi, pour la préparation du second lot, le fer et le manganèse, qui sont les métaux du groupe V à VIII apportés par les sels métalliques, représentent donc 56%, en masse, des particules de catalyseur usé au sein du mélange entre les sels métalliques et les particules de catalyseur usé. Le cérium, apporté par les sels métalliques, pèse 0,70 gramme et représente 16%, en masse, des particules de catalyseur usé. On précipite les métaux, sous agitation intense, avec une solution à 1,5 mol/l de carbamate d'ammonium, jusqu'à atteindre un pH de 8,9. On laisse décanter la préparation puis on en sépare la phase lourde de la phase légère qui est jetée. La phase lourde est séchée en étuve à 100°C jusqu'à obtention d'un produit sec, qui est ensuite calciné à 450°C, sous air, pendant quatre heures.

L'activité de chaque catalyseur des premier et second lots a été mesurée. Cette activité est mesurée par un test standardisé, qui disperse 0,5 gramme de catalyseur dans 10 grammes d'un ballast inerte, et qui fait passer, à travers un lit ainsi constitué, un mélange de 0,8 l/min de NH₃ à 2000 ppmv et 0,6 l/min de NO à 2000 ppmv. La mesure est effectuée à 215°C et le résultat de cette mesure est donné en calculant (-Ln(1-rendement)), le rendement étant le rendement de conversion de NO.

Les résultats de mesure pour les premier et second lots sont les suivants :

| | Premier lot | Second lot |
|---|---|---|
| Nombre de préparations | 8 | 3 |
| Valeur moyenne de l'activité (adimensionnelle) | 3.75 | 3.70 |
| Ecart type sur l'activité | 0.099 | 0.137 |

D'une manière surprenante, les activités des catalyseurs du second lot sont comparables à celles des catalyseurs du premier lot.

## Revendications

1. Procédé de fabrication d'un catalyseur neuf, dans lequel :
- on dispose d'un catalyseur usé ayant un support formé d'oxyde de titane ou d'alumine,
- après avoir dépoussiéré, puis lavé et puis séché le catalyseur usé, on le broie en des particules de manière que la taille médiane desdites particules de catalyseur usé soit en deçà de 64 µm,
- dans une solution aqueuse, on mélange lesdites particules de catalyseur usé avec des sels métalliques comprenant au moins un métal du groupe V à VIII, de sorte que, dans le mélange desdites particules de catalyseur usé et de sels métalliques, le ou les métaux du groupe V à VIII apportés par les sels métalliques représentent entre 20% et 100%, en masse, desdites particules de catalyseur usé,
- par ajout d'un agent précipitant dans ce mélange jusqu'à obtention d'un pH supérieur à 7, on opère une précipitation des métaux des sels métalliques en utilisant lesdites particules de catalyseur usé comme substrat pour le dépôt des métaux précipités, et
- après avoir récupéré et séché la phase lourde contenant les métaux précipités et leur substrat de précipitation, on la calcine à une température comprise entre 400 et 550°C pour obtenir le catalyseur neuf.

2. Procédé suivant la revendication 1, dans lequel le catalyseur usé contient du vanadium.

3. Procédé suivant l'une des revendications 1 ou 2, dans lequel le mélange desdites particules de catalyseur usé présente, avant ajout de l'agent précipitant, un pH compris entre 4,1 et 6.

4. Procédé suivant l'une quelconque des revendications précédentes, dans lequel l'agent précipitant est ajouté au mélange desdites particules de catalyseur usé et des sels métalliques jusqu'à obtention d'un pH compris entre 8,5 et 9.

5. Procédé suivant l'une quelconque des revendications précédentes, dans lequel le catalyseur usé provient d'une unité de dénitrification SCR.

6. Procédé suivant l'une quelconque des revendications précédentes, dans lequel le métal ou au moins un des métaux des sels métalliques est le fer.

7. Procédé suivant l'une quelconque des revendications précédentes, dans lequel le métal ou au moins un des métaux des sels métalliques est le manganèse.

8. Procédé suivant l'une quelconque des revendications précédentes, dans lequel l'agent précipitant est le carbamate d'ammonium, l'ammoniac, le carbonate d'ammonium et/ou la monoéthanolamine.

9. Procédé suivant l'une quelconque des revendications précédentes, dans lequel à l'issue de la calcination, la phase lourde calcinée est broyée en poudre.
